(19) **Europäisches Patentamt / European Patent Office / Office européen des brevets**

(11) **EP 4 651 600 A1**

(12) **EUROPEAN PATENT APPLICATION**
published in accordance with Art. 153(4) EPC

(43) Date of publication:
19.11.2025 Bulletin 2025/47

(21) Application number: 23920501.6

(22) Date of filing: 10.02.2023

(51) International Patent Classification (IPC):
H04W 72/21 (2023.01)   H04W 72/04 (2023.01)

(52) Cooperative Patent Classification (CPC):
H04W 72/04; H04W 72/21

(86) International application number:
PCT/CN2023/075354

(87) International publication number:
WO 2024/164293 (15.08.2024 Gazette 2024/33)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: GUANGDONG OPPO MOBILE
TELECOMMUNICATIONS
CORP., LTD.
Dongguan, Guangdong 523860 (CN)

(72) Inventors:
• LIN, Yanan
  Dongguan, Guangdong 523860 (CN)
• ZHANG, Yi
  Dongguan, Guangdong 523860 (CN)
• XU, Jing
  Dongguan, Guangdong 523860 (CN)

(74) Representative: Novagraaf Technologies
Bâtiment O2
2, rue Sarah Bernhardt
CS90017
92665 Asnières-sur-Seine Cedex (FR)

(54) **CHANNEL RESOURCE INDICATION METHOD AND APPARATUS, AND DEVICE, MEDIUM AND PROGRAM PRODUCT**

(57) The present application belongs to the field of communications. Disclosed are a channel resource indication method and apparatus, and a device, a medium and a program product. The method is executed by means of a terminal device, and the method comprises: sending a first channel, which carries first information for indicating that a pre-configured channel resource is not used, wherein a physical resource occupied by the first channel is a physical resource in a first resource set, and the first resource set comprises at least one resource unit. In the method, the first channel is sent, and the first channel carries the first information for indicating that the pre-configured channel resource is not used, such that a network device can be helped to reallocate the unused pre-configured channel resource to another terminal device for data transmission, thereby improving the data transmission efficiency.

Transmitting a first channel, wherein the first channel carries first information, the first information indicating that a preconfigured channel resource is unused; wherein a physical resource occupied by the first channel is a physical resource within a first resource set, the first resource set including at least one resource unit — 210

FIG. 2

**Description**

**TECHNICAL FIELD**

Embodiments of the present disclosure relate to the technical field of communications, and in particular, relate to a method and apparatus for indicating channel resources, and a device, a medium, a program product thereof.

**RELATED ART**

With development of communication technologies, the usage amount of mobile data is increasing, and stricter requirements are imposed on the efficiency of mobile data services.

In the related art, a terminal device is configured with a plurality of channel resources to transmit mobile data. In a case where a small amount of mobile data is transmitted, the terminal device informs the network device of unused channel resources, and the network device reallocates the unused channel resources to other terminal devices for transmission of mobile data, such that the efficiency is improved.

However, how the terminal device informs the network device of unused channel resources is an issue urgently to be solved.

**SUMMARY**

The embodiments of the present disclosure provide a method and apparatus for indicating channel resources, and a device, a medium, a program product thereof.

According to an aspect of the embodiments of the present disclosure, a method for indicating channel resources is provided. The method is performed by a terminal device, and the method includes: transmitting a first channel, wherein the first channel carries first information, the first information indicating that a preconfigured channel resource is unused; wherein a physical resource occupied by the first channel is a physical resource within a first resource set, the first resource set including at least one resource unit.

According to another aspect of the embodiments of the present disclosure, a method for indicating channel resources is provided. The method is performed by a network device, and the method includes: receiving a first channel, wherein the first channel carries first information, the first information indicating that a preconfigured channel resource is unused; wherein a physical resource occupied by the first channel is a physical resource within a first resource set, the first resource set including at least one resource unit.

According to another aspect of the embodiments of the present disclosure, an apparatus for indicating channel resources is provided. The apparatus includes: a transmitting module, configured to transmit a first channel, wherein the first channel carries first information, the first information indicating that a preconfigured channel resource is unused; wherein a physical resource occupied by the first channel is a physical resource within a first resource set, the first resource set including at least one resource unit.

According to another aspect of the embodiments of the present disclosure, an apparatus for indicating channel resources is provided. The apparatus includes: a receiving module, configured to receive a first channel, wherein the first channel carries first information, the first information indicating that a preconfigured channel resource is unused; wherein a physical resource occupied by the first channel is a physical resource within a first resource set, the first resource set including at least one resource unit.

According to another aspect of the embodiments of the present disclosure, a terminal device is provided. The terminal device includes: a processor; a transceiver connected to the processor; and a memory configured to store one or more instructions executable by the processor; wherein the processor is configured to load and execute the one or more instructions to perform the methods for indicating channel resources as described in the above aspects.

According to another aspect of the embodiments of the present disclosure, a network device is provided. The network device includes: a processor; a transceiver connected to the processor; and a memory configured to store one or more instructions executable by the processor; wherein the processor is configured to load and execute the one or more instructions to perform the methods for indicating channel resources as described in the above aspects.

According to another aspect of the embodiments of the present disclosure, a computer-readable storage medium is provided. The computer-readable storage medium stores at least one instruction, at least one program segment, at least one code set or instruction set, wherein the at least one instruction, the at least one program segment, the at least one code set or instruction set, when loaded and executed by a processor, causes the terminal device or network device to perform the methods for indicating channel resources as described in the above aspects.

According to another aspect of the embodiments of the present disclosure is provided, a computer program product or computer program is provided. The computer program product or computer program includes at least one computer instruction stored in a computer-readable storage medium, wherein the at least one computer instruction, when loaded and executed by a processor from the computer-readable storage medium, causes the terminal device or network device to perform the methods for indicating channel resources as described in the above aspects.

The technical solutions according to the embodiments of the present disclosure have at least the following beneficial effects.

The first channel is transmitted, wherein the first channel carries first information, the first information indicating that a preconfigured channel resource is unused. A physical resource occupied by the first channel is a physical resource within a first resource set, wherein the first resource set includes at least one resource unit. In this way, the network device is capable of reallocating the unused preconfigured channel resources to other terminal devices to transmit data, thereby improving the data transmission efficiency.

## BRIEF DESCRIPTION OF DRAWINGS

For clearer descriptions of the technical solutions according to the embodiments of the present disclosure, the accompanying drawings required for describing the embodiments are briefly introduced hereinafter. Apparently, the accompanying drawings in the following description illustrate merely some embodiments of the present disclosure, and those of ordinary skill in the art may still derive other drawings from these accompanying drawings without creative efforts.

FIG. 1 illustrates a schematic diagram of a network architecture according to some embodiments of the present disclosure;

FIG. 2 illustrates a flowchart of a method for indicating channel resources according to some embodiments of the present disclosure;

FIG. 3 illustrates a schematic diagram of configuring a transmission occasion according to some embodiments of the present disclosure;

FIG. 4 illustrates a schematic diagram of a method for indicating channel resources according to some embodiments of the present disclosure;

FIG. 5 illustrates a schematic diagram of a method for indicating channel resources according to some embodiments of the present disclosure;

FIG. 6 illustrates a schematic diagram of configuring a transmission occasion according to some embodiments of the present disclosure;

FIG. 7 illustrates a schematic diagram of configuring a transmission occasion according to some embodiments of the present disclosure;

FIG. 8 illustrates a schematic diagram of configuring a resource unit according to some embodiments of the present disclosure;

FIG. 9 illustrates a schematic diagram of a method for indicating channel resources according to some embodiments of the present disclosure;

FIG. 10 illustrates a schematic diagram of configuring a resource unit according to some embodiments of the present disclosure;

FIG. 11 illustrates a schematic diagram of a method for indicating channel resources according to some embodiments of the present disclosure;

FIG. 12 illustrates a schematic diagram of configuring a transmission occasion according to some embodiments of the present disclosure;

FIG. 13 illustrates a schematic diagram of a method for indicating channel resources according to some embodiments of the present disclosure;

FIG. 14 illustrates a flowchart of a method for indicating channel resources according to some embodiments of the present disclosure;

FIG. 15 illustrates a block diagram of an apparatus for indicating channel resources according to some embodiments of the present disclosure;

FIG. 16 illustrates a block diagram of an apparatus for indicating channel resources according to some embodiments of the present disclosure; and

FIG. 17 illustrates a schematic structural diagram of a terminal device or network device according to some embodiments of the present disclosure.

## DETAILED DESCRIPTION

For clearer descriptions of the objectives, technical solutions, and advantages of the present disclosure, the embodiments of the present disclosure are further described in detail hereinafter with reference to the accompanying drawings.

Embodiments are described in detail herein, and examples of the embodiments are illustrated in the accompanying drawings. When the following description refers to the accompanying drawings, the same numbers in different accompanying drawings represent the same or similar elements unless otherwise indicated. The embodiments described in the following embodiments do not represent all embodiments consistent with the present disclosure. Rather, they are merely examples of apparatuses and methods consistent with some aspects of the present disclosure, as detailed in the appended claims.

The terms in the present disclosure are used for the purpose of describing particular embodiments only and are not intended to limit the present disclosure. As used in the present disclosure and the appended claims, the singular forms "a," "an," and "the" are intended to include the plural forms as well, unless the context clearly indicates otherwise. It should also be understood that the term "and/or" as used herein refers to and encompasses any or all possible combinations of one or more associated listed items.

It should be noted that user information (including, but not limited to, user device information, user personal information, or the like) and data (including, but not limited to, data used for analysis, stored data, displayed data, or the like) involved in the present disclosure are authorized by the user or fully authorized by all the parties, and the collection, use and processing of the relevant data need to comply with relevant laws and regulations and standards of the relevant countries and regions.

It should be understood that although the terms "first," "second," or the like may be used herein to describe various information, such information should not be limited to these terms. These terms are only used to distinguish one type of information from another. For example, a first parameter may be referred to as a second parameter, and similarly, a second parameter may be referred to as a first parameter, without departing from the scope of the present disclosure. The phrases "in a case where" and "if" as used herein may be interpreted as "in the case that," "in the case where," or "in response to determining that," depending on the context.

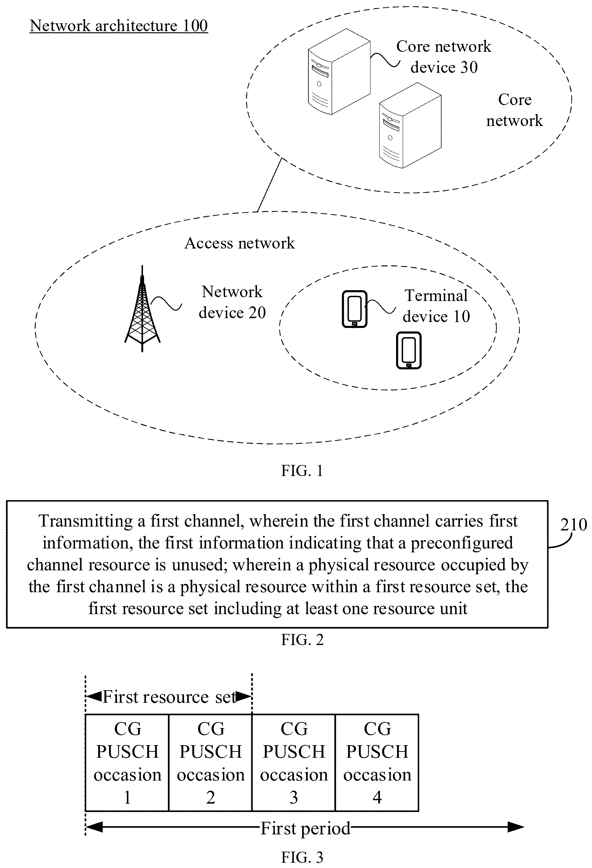

FIG. 1 illustrate a schematic diagram of a network architecture 100 according to some embodiments of the present disclosure. The network architecture 100 involves a terminal device 10, a network device 20, and a core network device 30.

The terminal device 10 may be a user equipment (UE), an access terminal, a subscriber unit, a subscriber station, a mobile station, a mobile platform, a remote station, a remote terminal, a mobile device, a wireless communication device, a user agent, or a user apparatus. In some embodiments, the terminal device 10 may be a cellular phone, a cordless phone, a Session Initiation Protocol (SIP) phone, a wireless local loop (WLL) station, a personal digital assistant (PDA), a handheld device with a wireless communication function, a computing device or another processing device connected to a wireless modem, a vehicle-mounted device, a wearable device, a terminal device in a 5$^{th}$ generation (5G) system, a terminal device in an evolved public land mobile network (PLMN), or the like, which is not limited in the embodiments of the present disclosure. For the convenience of description, the devices mentioned above are collectively referred to as the terminal device. A plurality of terminal devices 10 are usually deployed. One or more terminal devices 10 may be distributed in a cell managed by each network device 20.

The network device 20 is a device deployed in an access network to provide a wireless communication function for the terminal device 10. The network device 20 may include various forms of macro base stations, micro base stations, relay stations, access points, or the like. In systems employing different radio access technologies, devices with the function of the network device may have different names, for example, gNodeB or gNB in a 5G new radio (NR) system. As the communication technologies evolve, the name "network device" may change. For the convenience of description, in the embodiments of the present disclosure, the above apparatuses providing the wireless communication function for the terminal device 10 are collectively referred to as the network device. In some embodiments, a communication relationship may be established between the terminal device 10 and the core network device 30 over the network device 20. For example, in a long-term evolution (LTE) system, the network device 20 may be an evolved universal terrestrial radio access network (EUTRAN) or at least one eNodeB in the EUTRAN. In a 5G NR system, the network device 20 may be a radio access network (RAN) or at least one gNB in the RAN. In the embodiments of the present disclosure, unless otherwise specified, the term "network device" is the network device 20, e.g., a base station.

The core network device 30 is a device deployed in a core network. The core network device 30 mainly functions to provide a user connection, user management and service bearing, and to provide an interface to an external network as a bearer network. For example, core network devices in the 5G NR system include devices such as an access and mobility management function (AMF) network element, a user plane function (UPF) network element, and a session management function (SMF) network element.

In some embodiments, the network device 20 communicates with the core network device 30 using a specific air interface technology, e.g., an NG interface in the 5G NR system. The network device 20 communicates with the terminal device 10 using a specific air interface technology, e.g., over a Uu interface.

Relevant technologies involved in the embodiments of the present disclosure are introduced hereinafter.

## (1) Configured Grant Physical Uplink Shared Channel (CG PUSCH)

The NR uplink supports semi-static periodic transmission, i.e., CG PUSCH transmission, which specifically includes Type-1 CG and Type-2 CG.

Type-1 CG: Subsequent to configuration of a transmission parameter over radio resource control (RRC), the CG PUSCH transmission takes effect, with no need of being activated by downlink control information (DCI).

Type-2 CG: Subsequent to configuration of a transmission parameter over RRC, the CG PUSCH transmission takes effect in response to being activated by DCI.

The CG supports a symbol-level periodicity of two symbols or seven symbols and a slot-level periodicity of {1, 2, 4, 5, 8, 10, 16, 20, 32, 40...}. In Release 15/16/17 (R15/16/17), one PUSCH is transmitted within one CG period (that is, only one PUSCH occasion is present). In R16, one UE may have a plurality of CG configurations at the same time, and the parameters of different CG configurations are configured independently. The UE determines a corresponding CG PUSCH transmission resource for each CG configuration.

## (2) CG-Uplink Control Information (CG-DCI)

The NR introduces CG-DCI to support the CG PUSCH transmission on an unlicensed frequency band, that is, the UE embeds the CG-DCI into a transmitted CG PUSCH to inform the base station of the parameters as listed in Table 1.

Table 1

| Field | Bit width |
|---|---|
| Hybrid automatic repeat request (HARQ) process number | 4 |
| Redundancy version (RV) | 2 |
| New data indicator (NDI) $\lceil \log_2 C \rceil$ | 1 |
| Channel occupancy time (COT) sharing information | -if both higher layer parameter *ul-toDL-COT-SharingED-Threshold* and higher layer parameter *cg-COT-SharingList* are configured, wherein C is the number of combinations configured in *cg-COT-SharingList;* <br> 1-if higher layer parameter *ul-toDL-COT-SharingED-Threshold* is not configured and higher layer parameter *cg-COT-SharingList* is configured; <br> 0- if both higher layer parameter *ul-toDL-COT-SharingED-Threshold* and higher layer parameter *cg-COT-SharingList* are not configured; <br> If a UE indicates COT sharing other than "no sharing" in a CG PUSCH within the UE's initiated COT, the UE should provide consistent COT sharing information in all the subsequent CG PUSCHs, if any, occurring within the same UE's initiated COT such that the same DL starting point and duration are maintained. |

The first three items of information are the HARQ process number, RV and NDI corresponding to a current CG PUSCH, and the last item of information indicates whether the subsequent resources within the COT where the current CG PUSCH is located may be shared with downlink transmission.

## (3) eXtended Reality (XR)

A research project named "eXtended Reality and Cloud Game Evaluations for NR" has been approved in relevant conferences, and services researched in this project include augmented reality (AR), virtual reality (VR), could game (CG) and the like. One of the main services of XR/CG is the video streaming service, a transmission rate of which is measured by frame per second (fps). The transmission rate may be 30 fps, 60 fps, 90 fps, or 120 fps, and the corresponding period of the video stream is {33.33 ms, 16.67 ms, 11.1 1ms, or 8.33 ms}.

XR data has the characteristics of a changeable packet size and a large average value. Taking AR/VR with a transmission rate of 100 million bits per second (Mbps) as an example, its uplink data packets have an average of 20833 bytes, with a maximum of 31250 bytes and a minimum of 10417 bytes, that is, the data packets to be transmitted within each period have a size from 10417 bytes to 31250 bytes. In an actual system with 100M bandwidth, transmission of a data packet of 20833 bytes occupies transmission resources in about four slots.

Currently, it is determined that the 3rd Generation Partnership Project (3GPP) supports configuring a plurality of PUSCH occasions within one CG period for transmission of larger XR data packets, and also supports configuring a plurality sets of CGs for transmission of larger XR data packets. In a case where a smaller amount of data is transmitted at a time, and transmission of the data does not need to occupy a plurality of preconfigured PUSCH occasions, the UE may inform the base station of the unused PUSCH occasions, and the base station reallocates the unused PUSCH occasions to other UEs for data transmission. In this way, the system efficiency is improved.

FIG. 2 illustrates a flowchart of a method for indicating channel resources according to some embodiments of the present disclosure. The method is performed by a terminal device, and the method includes the following process.

In process 210, the terminal device transmits a first channel, wherein the first channel carries first information, the first information indicating that a preconfigured channel resource is unused; wherein a physical resource occupied by the first channel is a physical resource within a first resource set, the first resource set including at least one resource unit.

One or more preconfigured channel resources are present. For example, a plurality of preconfigured channel resources appear periodically. In different embodiments, the fact that "the first information indicating that a preconfigured channel resource is unused" may be interpreted as at least one of the following items.

The first information indicates that all of the preconfigured channel resources are unused, or indicates all of unused preconfigured channel resources.

The first information indicates that part of the preconfigured channel resources are unused, or indicates an unused part of preconfigured channel resources.

The first information indicates that all of remaining preconfigured channel resources are unused.

The first information indicates that remaining preconfigured channel resources within a current period are unused.

The first information explicitly indicates unused preconfigured channel resources. For example, the first information explicitly carries information such as resource indices and resource locations of unused preconfigured channel resources.

The first information implicitly indicates unused preconfigured channel resources. For example, the first information does not carry information such as resource indices and resource locations of unused preconfigured channel resources, but time-domain positions corresponding to the first information implicitly indicate that the remaining preconfigured channel resources within the current period are unused. For example, the first information implicitly indicates that all remaining preconfigured channel resources subsequent to the time-domain position corresponding to the first information are unused. For example, the first information implicitly indicates that next preconfigured channel resources subsequent to the time-domain positions corresponding to the first information are unused. For another example, the first information implicitly indicates that preconfigured channel resources within a predetermined duration subsequent to the time-domain position corresponding to the first information are unused.

The first information indicates that unused preconfigured channel resources are present, but the first information does not explicitly indicate which preconfigured channel resources are unused. The unused preconfigured channel resources are determined in a manner specified in protocols, in a preconfigured manner, or autonomously.

**With respect to the first resource set:**

The first resource set includes at least one time-domain physical resource, e.g., a slot, a sub-slot, a symbol, or a preconfigured physical channel time-domain resource. The preconfigured physical channel time-domain resource includes a physical uplink control channel (PUCCH) or PUSCH time-domain resource configured over RRC signaling or a PUSCH transmission occasion; and/or, the first resource set includes at least one frequency-domain physical resource, e.g., a frequency band, a sub-band, a resource block (RB), a subcarrier, or a preconfigured physical channel frequency-domain resource. The preconfigured physical channel frequency-domain resource includes a PUCCH or PUSCH frequency-domain resource configured over RRC signaling.

In some embodiments, the first resource set is periodic, or a physical resource in the first resource set is periodic.

In some embodiments, the first resource set is determined based on a transmission occasion for a periodic channel, and the transmission occasion is also referred to as a transmission resource.

The at least one resource unit in the first resource set is determined based on Q transmission occasions for the periodic channel, wherein Q is a positive integer; or the at least one resource unit is determined based on a resource unit where at least one transmission occasion for the periodic channel is located.

In some embodiments, the Q transmission occasions are configured by a network device; or the at least one transmission occasion is configured by a network device.

In some embodiments, the at least one resource unit is the Q transmission occasions for the periodic channel; or the at least one resource unit is a resource unit where the Q transmission occasions for the periodic channel are located.

The resource unit includes one of: at least one slot; at least one sub-slot; at least one symbol; at least one RB; or at least one subcarrier.

**With respect to the** case **where the at least one resource unit in the first resource** set **is determined based on Q transmission occasions for the periodic channel:**

In some embodiments, the Q transmission occasions include one of:

(1) first Q transmission occasions within a first period of the periodic channel;
(2) first Q transmission occasions satisfying a first condition within a first period of the periodic channel; or
(3) first A transmission occasions within a first period of the periodic channel and last (Q-A) transmission occasions within a period prior to the first period;

wherein A is a non-negative integer, A is less than Q, Q is less and or equal to a number T of transmission occasions within one period of the periodic channel, and T is a positive integer. In some embodiments, the first condition is used to determine an effective uplink transmission occasion or determine a transmission occasion for transmitting the first information. The meaning of the first condition is not limited thereto.

In the above situations, the first information indicates that the unused preconfigured channel resource is a channel resource within the first period.

In some embodiments, the Q transmission occasions are Q transmission occasions within at least one period of the periodic channel.

With respect to different implementations of the Q transmission occasions:

For implementation (1) where the Q transmission occasions are first Q transmission occasions within the first period of the periodic channel, FIG. 3 illustrates a schematic diagram of Q transmission occasions according to some embodiments of the present disclosure. In some embodiments, taking the transmission occasion being a CG PUSCH occasion as an example, a start position of the first period is a start position of a CG PUSCH occasion 1 (illustrated by the dotted line at the left side of FIG. 3), Q is 2, two CG PUSCH occasions are first two CG PUSCH occasions within the first period, and the first resource set includes the CG PUSCH occasion 1 and a CG PUSCH occasion 2. In this example, the unused preconfigured channel resource is at least one of a CG PUSCH occasion 3 or a CG PUSCH occasion 4.

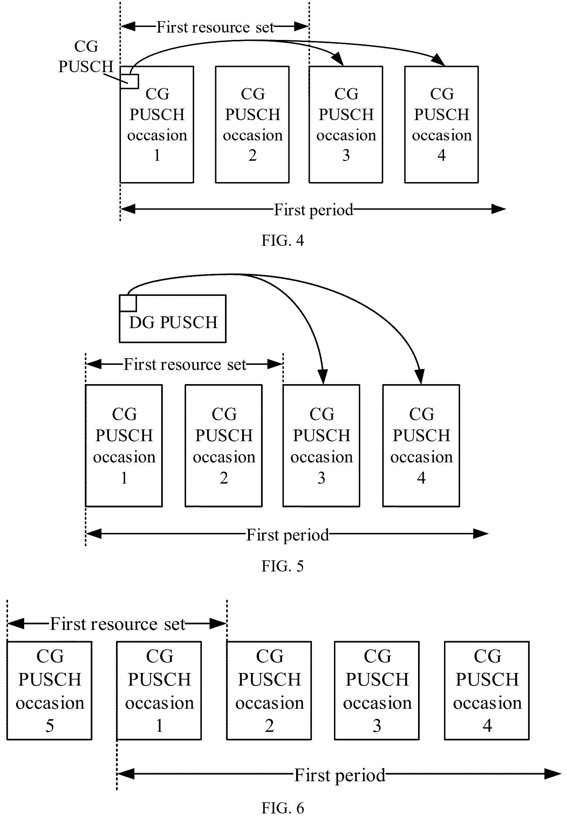

FIG. 4 illustrates a schematic diagram of a method for indicating channel resources according to some embodiments of the present disclosure. The terminal device acquires one CG configuration by receiving signaling (RRC or DCI) from the network device. The CG configuration includes that the first period (CG period) is 16 ms and the first period includes four CG PUSCH occasions, where Q is 2. The first resource set includes the CG PUSCH occasion 1 and the CG PUSCH occasion 2.

In a case where the terminal device transmits the CG PUSCH in at least one of the CG PUSCH occasion 1 and the CG PUSCH occasion 2, the first information carried in the CG PUSCH indicates that at least one of the CG PUSCH occasion 3 or the CG PUSCH occasion 4 within the first period is unused, used, or to be determined. The occasion being unused means that the CG PUSCH is not to be transmitted on the corresponding CG PUSCH occasion based on the preconfigured parameters.

In a case where the terminal device does not transmit the preconfigured CG PUSCH but transmits another uplink channel, e.g., the PUSCH or PUCCH, in at least one of the CG PUSCH occasion 1 and the CG PUSCH occasion 2, FIG. 5 illustrates a schematic diagram of a method for indicating channel resources according to some embodiments of the present disclosure. Taking the another uplink channel being a dynamic grant (DG) PUSCH as an example, a time-domain resource occupied by the DG PUSCH overlaps with time-domain resources included in the CG PUSCH occasion 1 and the CG PUSCH occasion 2, and the terminal device indicates, by transmitting the first information in the DG PUSCH, that at least one of the CG PUSCH occasion 3 or the CG PUSCH occasion 4 within the first period is unused, used, or to be determined.

In some embodiments, the network device does not indicate Q in the CG configuration, and Q is considered to be equal to T by default.

For implementation (2) where the Q transmission occasions are the first Q transmission occasions satisfying the first condition within the first period of the periodic channel, the first condition includes at least one of the following items:

symbols occupied by the transmission occasions are all uplink symbols;
symbols occupied by the transmission occasions are uplink symbols or flexile symbols;
RBs occupied by the transmission occasions are all uplink RBs;
RBs occupied by the transmission occasions are uplink RBs, flexible RBs, or RBs within a guard band;
symbols occupied by the transmission occasions do not include a downlink symbol;
symbols occupied by the transmission occasions do not include a downlink symbol or a flexible symbol;
symbols occupied by the transmission occasions do not include a symbol occupied by a synchronization signal;
symbols occupied by the transmission occasions do not include a symbol occupied by a broadcast channel;
symbols occupied by the transmission occasions do not include a symbol occupied by a downlink control channel;

RBs occupied by the transmission occasions do not include a downlink RB;
RBs occupied by the transmission occasions do not include an RB within a guard band or a flexible RB;
RBs occupied by the transmission occasions do not include an RB occupied by a synchronization signal;
RBs occupied by the transmission occasions do not include an RB occupied by a broadcast channel;
RBs occupied by the transmission occasions do not include an RB occupied by a downlink control channel;
the transmission occasions are not discarded or cancelled; or
the transmission occasions are transmission occasions actually transmitted by the terminal device.

In some embodiments, because the transmission occasions are used for uplink transmission, in a case where the occupied symbols are all uplink symbols, or the occupied symbols are uplink symbols or flexile symbols, or the occupied RBs are all uplink RBs, or the occupied RBs are uplink RBs, flexible RBs, or RBs within a guard band, the transmission occasions satisfy the first condition.

The uplink symbols and the uplink RBs are used for uplink transmission only, and the flexile symbols and the flexile RBs may be used for both uplink transmission and downlink transmission. The guard band is a gap between bands, and the RB within a guard band may be used for both uplink transmission and downlink transmission, or the RB within a guard band has no transmission function.

In some embodiments, in a case where the occupied symbols are downlink symbols or flexile symbols, or the occupied symbols are symbols occupied by the synchronization signal, the broadcast channel or the downlink control channel, or the occupied RBs are RBs within a guard band or flexible RBs, or the occupied RBs are RBs occupied by the synchronization signal, the broadcast channel or the downlink control channel, the transmission occasions fail to satisfy the first condition.

Because transmitted content in the synchronization signal, the broadcast channel or the downlink control channel is determined, in order to avoid collision, the symbol or RB occupied by the transmission occasion is discarded, cancelled, or not used to transmit the first information. The downlink symbol and the downlink RB are used for downlink transmission only.

In some embodiments, in a case where the transmission occasions are not discarded or cancelled, or the transmission occasions are transmission occasions actually transmitted by the terminal device, the transmission occasions satisfy the first condition, that is, the transmission occasions satisfy the first condition in a case where the transmission occasions are transmittable or have been actually transmitted.

For implementation (3) where the Q transmission occasions are first A transmission occasions within the first period of the periodic channel and last (Q-A) transmission occasions within a period prior to the first period, wherein A is non-negative integer and A is less than Q, FIG. 6 illustrates a schematic diagram of Q transmission occasions according to some embodiments of the present disclosure.

In some embodiments, taking the transmission occasion being a CG PUSCH occasion as an example, wherein a start position of the first period is a start position of a CG PUSCH occasion 1, Q is 2, and A is 1, the last transmission occasion within the period prior to the first period is a CG PUSCH occasion 5, that is, the first resource set includes the CG PUSCH occasion 1 and the CG PUSCH occasion 5.

In some embodiments, the Q transmission occasions are configured by the network device based on a bitmap or based on index values of the transmission occasions. In some embodiments, taking the transmission occasion being a CG PUSCH occasion as an example, wherein "0" indicates that the CG PUSCH occasion is not configured, "1" indicates that the CG PUSCH occasion is configured, and Q is 2, in a total of four CG PUSCH occasions from a CG PUSCH occasion 1 to a CG PUSCH occasion 4, the value of the bitmap is 1100, that is, the network device configures that the first resource set includes the CG PUSCH occasion 1 and the CG PUSCH occasion 2.

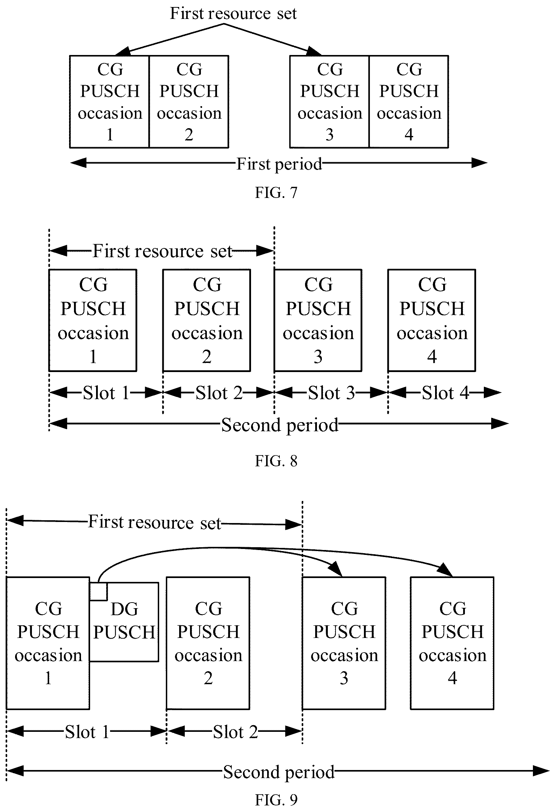

FIG. 7 illustrates a schematic diagram of Q transmission occasions according to some embodiments of the present disclosure. In a case where the Q transmission occasions are configured by the network device based on the index values of the transmission occasions, taking the transmission occasion being a CG PUSCH occasion as an example, wherein a start position of the first period is a start position of a CG PUSCH occasion 1, and Q is 2, two CG PUSCH occasions are configured by the network device based on the CG PUSCH index values. Taking an example where the configured CG PUSCH index values are 1 and 3, the CG PUSCH index value 1 corresponds to the CG PUSCH occasion 1, and the CG PUSCH index value 3 corresponds to the CG PUSCH occasion 3, that is, the network device configures that the first resource set includes the CG PUSCH occasion 1 and the CG PUSCH occasion 3.

**With respect to the case where the at least one resource unit is determined based on a resource unit where at least one transmission occasion for the periodic channel is located:**

In some embodiments, the at least one resource unit is determined based on a first reference resource unit. The first reference resource unit is a resource unit where the at least one transmission occasion for the periodic channel is located.

In some embodiments, the at least one resource unit is determined based on the first reference resource unit and a second reference resource unit. The first reference resource unit and the second reference resource unit are resource units where the at least one transmission occasion for the periodic channel is located.

In some embodiments, a time-domain position of the at least one resource unit is within a first time-domain range, wherein the first time-domain range is a time-domain range from a time-domain position of the first reference resource unit to a time-domain position of the second reference resource unit.

In some embodiments, the second reference resource unit is configured by a network device.

In some embodiments, the at least one resource unit includes at least one of: the first reference resource unit; S resource units subsequent to the first reference resource unit; or V resource units prior to the first reference resource unit; wherein S and V are both non-negative integers.

In some embodiments, the first reference resource unit includes at least one of: a resource unit where a first transmission occasion within a second period of the periodic channel is located; a start resource unit within the second period of the periodic channel; or a resource unit preconfigured by a network device; wherein the resource unit is a slot, a sub-slot, or a symbol.

In the above situations, the preconfigured channel resource indicated by the first information as unused is a channel resource within the second period. The preconfigured channel resource indicated by the first information as unused may be explicitly indicated by the first information or implicitly indicated by the first information.

In some embodiments, the at least one resource unit includes one of: all resource units in the first time-domain range; a resource unit for uplink transmission in the first time-domain range; or a first resource unit in the first time-domain range, wherein the first resource unit includes a transmission occasion for the periodic channel; or a second resource unit in the first time-domain range, wherein the second resource unit includes a transmission occasion satisfying a first condition.

In some embodiments, the S resource units subsequent to the first reference resource unit include one of:

(1) first S consecutive resource units subsequent to the first reference resource unit;
(2) first S resource units for uplink transmission subsequent to the first reference resource unit;
(3) first S first resource units subsequent to the first reference resource unit, wherein the first resource units include a transmission occasion for the periodic channel; or
(4) first S second resource units subsequent to the first reference resource unit, wherein the second resource units include a transmission occasion satisfying a first condition.

With respect to the case (1), the first S consecutive resource units subsequent to the first reference resource unit are a resource unit (A+1), a resource unit (A+2), ......, a resource unit (A+S - 1). The resource unit (A+1) to the resource unit (A+S - 1) do not necessarily include a transmission occasion.

FIG. 8 illustrates a schematic diagram of at least one resource unit according to some embodiments of the present disclosure. In some embodiments, taking the transmission occasion being a CG PUSCH occasion as an example, wherein the resource unit is a slot, a start position of the second period is a start position of a CG PUSCH occasion 1, the first reference resource unit is a slot where the CG PUSCH occasion 1 is located, and S is 1, one consecutive resource unit is a slot 2. The least one resource unit includes the first reference resource unit and the first one resource unit subsequent to the first reference resource unit, i.e., the slot 1 and the slot 2.

In some embodiments, the least one resource unit includes consecutive (S+1) resource units from the first reference resource unit.

With respect to the case (2), that is, the first S resource units for uplink transmission subsequent to the first reference resource unit, the resource unit includes at least one of an uplink symbol or a flexible symbol. The uplink symbol or flexible symbol is configured over higher layer signaling or DCI.

With respect to the case (3), that is, the first S first resource units subsequent to the first reference resource unit, the first resource units include a transmission occasion for the periodic channel.

With respect to the case (4), that is, the first S second resource units subsequent to the first reference resource unit, the second resource units include a transmission occasion satisfying the first condition. The first condition indicates that a transmission occasion is an effective transmission occasion, and the first condition includes at least one of the following items:

symbols occupied by the transmission occasions are all uplink symbols;
symbols occupied by the transmission occasions are uplink symbols or flexile symbols;
RBs occupied by the transmission occasions are all uplink RBs;
RBs occupied by the transmission occasions are uplink RBs, flexible RBs, or RBs within a guard band;
symbols occupied by the transmission occasions do not include a downlink symbol;
symbols occupied by the transmission occasions do not include a downlink symbol or a flexible symbol;

symbols occupied by the transmission occasions do not include a symbol occupied by a synchronization signal;
symbols occupied by the transmission occasions do not include a symbol occupied by a broadcast channel;
symbols occupied by the transmission occasions do not include a symbol occupied by a downlink control channel;
RBs occupied by the transmission occasions do not include a downlink RB;
RBs occupied by the transmission occasions do not include an RB within a guard band or a flexible RB;
RBs occupied by the transmission occasions do not include an RB occupied by a synchronization signal;
RBs occupied by the transmission occasions do not include an RB occupied by a broadcast channel;
RBs occupied by the transmission occasions do not include an RB occupied by a downlink control channel;
the transmission occasions are not discarded or cancelled; or
the transmission occasions are transmission occasions actually transmitted by the terminal device.

In some embodiments, because the transmission occasions are used for uplink transmission, in a case where the occupied symbols are all uplink symbols, or the occupied symbols are uplink symbols or flexile symbols, or the occupied RBs are all uplink RBs, or the occupied RBs are uplink RBs, flexible RBs, or RBs within a guard band, the transmission occasions satisfy the first condition.

The uplink symbols and the uplink RBs are used for uplink transmission only, and the flexile symbols and the flexile RBs may be used for both uplink transmission and downlink transmission. The guard band is a gap between bands, and the RB within a guard band may be used for both uplink transmission and downlink transmission, or the RB within a guard band has no transmission function.

In some embodiments, in a case where the occupied symbols are downlink symbols or flexile symbols, or the occupied symbols are symbols occupied by the synchronization signal, the broadcast channel or the downlink control channel, or the occupied RBs are RBs within a guard band or flexible RBs, or the occupied RBs are RBs occupied by the synchronization signal, the broadcast channel or the downlink control channel, the transmission occasions fail to satisfy the first condition.

Because the transmitted content in the synchronization signal, the broadcast channel or the downlink control channel is determined, in order to avoid collision, the symbol or RB occupied by the transmission occasion is discarded, cancelled, or not used to transmit the first information. The downlink symbol and the downlink RB are used for downlink transmission only.

In some embodiments, in a case where the transmission occasions are not discarded or cancelled, or the transmission occasions are transmission occasions actually transmitted by the terminal device, the transmission occasions satisfy the first condition, that is, the transmission occasions satisfy the first condition in a case where the transmission occasions are transmittable or have been actually transmitted.

FIG. 9 illustrates a schematic diagram of a method for indicating channel resources according to some embodiments of the present disclosure. The first resource set is the slots where a CG PUSCH occasion 1 and a CG PUSCH occasion 2 within the second period are located, i.e., a slot 1 and a slot 2. When the terminal device transmits an uplink channel in at least one of the slot 1 or the slot 2, the uplink channel is a preconfigured CG PUSCH or another PUSCH or PUCCH, and the first information in the uplink channel indicates that at least one of a CG PUSCH occasion 3 or a CG PUSCH occasion 4 within the second period is unused, used, or to be determined.

In some embodiments, the at least one resource unit includes S resource units from the first reference resource unit and V resource units prior to the first reference resource unit.

In some embodiments, the V resource units prior to the first reference resource unit include one of:

last V consecutive resource units prior to the first reference resource unit;
last V resource units for uplink transmission prior to the first reference resource unit;
last V first resource units prior to the first reference resource unit, wherein the first resource units include a transmission occasion for the periodic channel; or
last V second resource units prior to the first reference resource unit, wherein the second resource units include a transmission occasion satisfying a first condition.

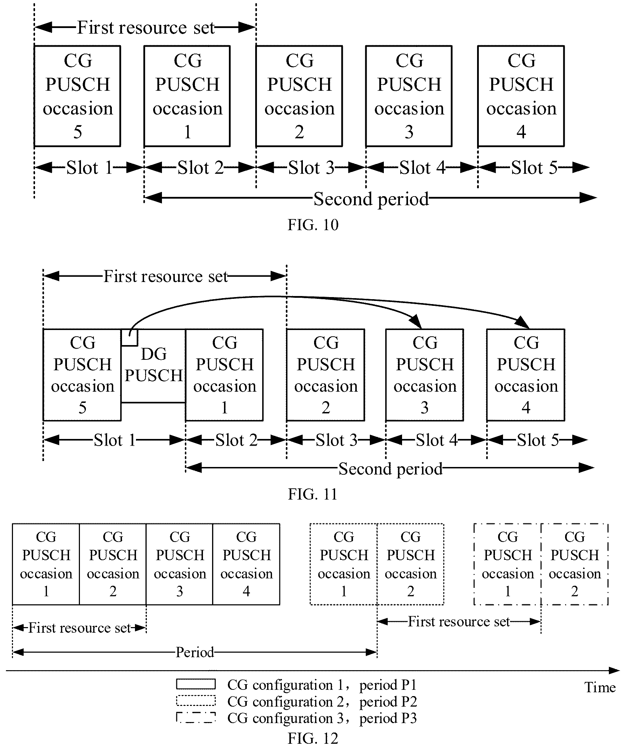

FIG. 10 illustrates a schematic diagram of configuring a resource unit according to some embodiments of the present disclosure. In some embodiments, taking the transmission occasion being a CG PUSCH occasion as an example, wherein the resource unit is a slot, a start position of the second period is a start position of a CG PUSCH occasion 1, the first reference resource unit is a slot 1 where the CG PUSCH occasion 1 is located, S is 1, and V is 1, two resource units include one resource unit from the first reference resource unit and one resource unit prior to the first reference resource unit, that is, the slot 1 and the slot 2.

FIG. 11 illustrates a schematic diagram of a method for indicating channel resources according to some embodiments of the present disclosure. The first resource set is the slots where a CG PUSCH occasion 1 and a CG PUSCH occasion 5 within the second period are located, i.e., the slot 1 and the slot 2. When the terminal device transmits an uplink channel in at least one of the slot 1 or the slot 2, the uplink channel is a preconfigured CG PUSCH or another PUSCH or PUCCH, and the first information in the uplink channel indicates that at least one of a CG PUSCH occasion 3 or a CG PUSCH occasion 4 within the second period is unused, used, or to be determined.

In some embodiments, the first resource set is determined based on configuration information, wherein the configuration information indicates at least one of: a period; a start time-domain unit identifier or a time-domain offset; a start frequency-domain unit identifier or a frequency-domain offset; the number of time-domain units; the number of frequency-domain units; a pattern of a time-domain unit; a pattern of a frequency-domain unit; at least one time-domain unit identifier or time-domain offset; or at least one frequency-domain unit identifier or frequency-domain offset; wherein the period is a duration from one first resource set to a next first resource set.

The start time-domain unit identifier or time-domain offset is used to determine a start point of the first period or first resource set in a time domain; and the start frequency-domain unit identifier or frequency-domain offset used to determine a start point of the first period or first resource set in a frequency domain.

The number of the time-domain units and the pattern of the time-domain unit represent distribution characteristics of the time-domain units.

The number of the frequency-domain units and the pattern of the frequency-domain unit represent distribution characteristics of the frequency-domain units.

The at least one time-domain unit identifier or time-domain offset corresponds to start points of the Q transmission occasions within one period in a time domain; and the at least one frequency-domain unit identifier or frequency-domain offset corresponds to start points of the Q transmission occasions within one period in the frequency domain.

FIG. 12 illustrates a schematic diagram of Q transmission occasions according to some embodiments of the present disclosure. The first resource set is determined based on configuration information. In some embodiments, taking the transmission occasion being a CG PUSCH occasion as an example, a start position of a period of the first resource set is a start position of a CG PUSCH occasion 1 in a CG configuration 1, and a length of the period is 16 ms. Each period includes two transmission occasions. As illustrated in FIG. 12, the first resource set includes a CG PUSCH occasion 1 and a CG PUSCH occasion 2 in the CG configuration 1, a CG PUSCH occasion 2 in the CG configuration 2, and a CG PUSCH occasion 1 in the CG configuration 3.

A period of the CG configuration 1 is P1, a period of the CG configuration 2 is P2, and a period of the CG configuration 3 is P3.

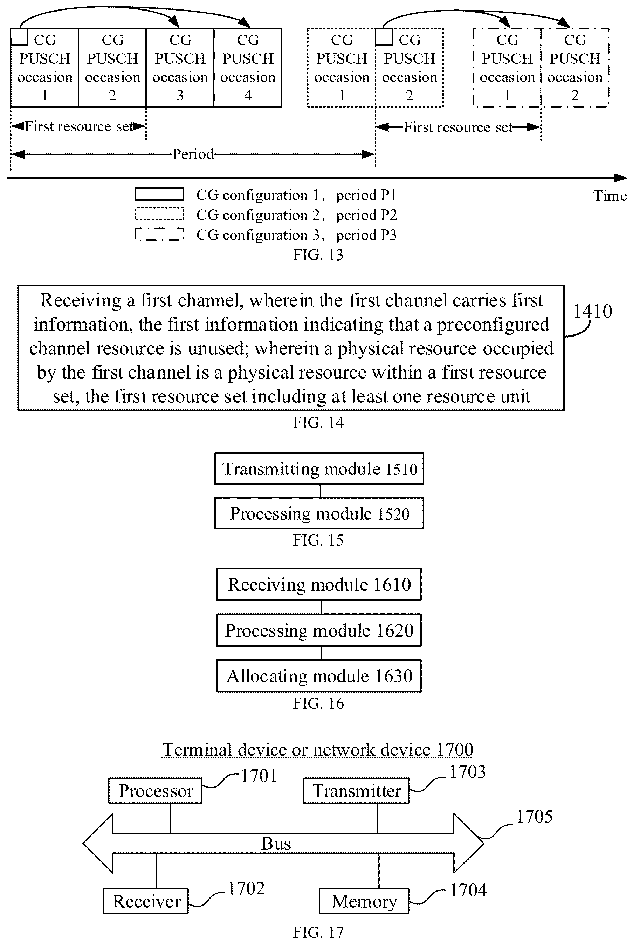

FIG. 13 illustrates a schematic diagram of a method for indicating channel resources according to some embodiments of the present disclosure. The period configured by the network device is 16 ms, each period includes two slots, and a bit size of the first information is unchanged, or is changed based on an agreed rule, but the first information indicates different objects within different periods.

In some embodiments, within a first period, the first information indicates a CG PUSCH occasion 3 and a CG PUSCH occasion 4 that the CG configuration 1 corresponds to are unused, used, or to be determined, and within a next period, the first information indicates a CG PUSCH occasion 1 and a CG PUSCH occasion 2 that the CG configuration 3 corresponds to are unused, used, or to be determined.

**With respect to the first channel:**

In some embodiments, the first channel is configured by a network device or specified in a communication protocol, and the first channel includes at least one of a PUCCH or a PUSCH.

In a case where the first channel is the PUCCH, the first channel carries the first information and second information, wherein the second information includes at least one of feedback information, a scheduling request (SR), or channel state information (CSI); or

in a case where the first channel is the PUSCH, the first channel carries the first information and third information, wherein the third information includes at least one of a transport block (TB), feedback information, or CSI;

wherein the feedback information includes at least one of an acknowledgement (ACK) or a negative acknowledgement (NACK).

In some embodiments, in the case where the first channel is the PUCCH, the PUCCH is configured to transmit other UCI. In a case where the PUCCH is configured in the first resource set, the first information is multiplexed in the PUCCH for transmission, and the first information is not configured with an independent PUCCH for transmission.

In some embodiments, in the case where the first channel is the PUSCH, the PUSCH is configured to transmit other UCI. In a case where the PUSCH is configured in the first resource set, the first information is multiplexed in the PUSCH for transmission, and the first information is not configured with an independent PUSCH for transmission.

In some embodiments, the network device configures a dedicated channel (PUCCH or PUSCH) to carry the first information. In a case where the dedicated channel does not overlap with another channel, the dedicated channel is the first channel. Furthermore, in a case where the dedicated channel overlaps with another channel, information carried in the another channel is multiplexed, and the channel carrying the multiplexed information is determined as the first channel.

In some embodiments, a start resource location of the first channel is a start resource location of the first resource set; or a start resource location of the first channel is subsequent to a start resource location of the first resource set; or a start resource location of the first channel is not prior to a start resource location of the first resource set. In this way, it is ensured that the terminal device has enough time to generate the first information.

**With respect to the first information:**

In some embodiments, the first information is coded and mapped to the first channel for transmission, that is, the first information is coded independently.

In some embodiments, fourth information is coded and mapped to the first channel, wherein the fourth information includes the first information and fifth information, wherein the fifth information includes at least one of HARQ process number information, RV information, modulation and coding scheme (MCS) information, feedback response information, an SR, or CSI.

In some embodiments, in a case where the first channel is a PUSCH configured over higher layer signaling, the fifth information includes at least one of the HARQ process number information or the feedback response information; or in a case where the first channel is a PUSCH scheduled by DCI, the fifth information includes the feedback response information.

In some embodiments, the preconfigured channel resource includes at least one of: a CG PUSCH occasion, a PUSCH transmission occasion configured over higher layer signaling, a PUCCH resource configured over higher layer signaling, or a PUSCH or PUCCH indicated by first DCI; wherein the first DCI is transmitted prior to the first channel.

In some embodiments, the unused preconfigured channel resource indicated by the first information includes at least one of an unused CG PUSCH occasion in a first CG configuration or unused CG PUSCH occasions in different CG configurations.

In some embodiments, in a case where the unused preconfigured channel resource includes the unused CG PUSCH occasion in the first CG configuration, the first information in the first resource set in the first CG configuration only indicates the unused CG PUSCH occasion in the first CG configuration.

In a case where the unused preconfigured channel resource includes unused CG PUSCH occasions in different CG configurations, and the first resource set is independently configured by the network device, the first resource set includes different CG configurations, wherein different CG configurations include unused CG PUSCH occasions; or the first information in the first resource set directly indicates an index value of the CG configuration, and further indicates an index value of a CG PUSCH occasion corresponding to the unused CG PUSCH occasion in the CG configuration.

In summary, in the method according to the embodiments of the present disclosure, the first channel is transmitted, wherein the first channel carries the first information, the first information indicating that a preconfigured channel resource is unused. A physical resource occupied by the first channel is a physical resource within a first resource set, wherein the first resource set includes at least one resource unit. In this way, the network device is capable of reallocating the unused preconfigured channel resources to other terminal devices to transmit data, thereby improving the data transmission efficiency.

In the method according to the embodiments of the present disclosure, it is further determined that at least one resource unit is first Q transmission occasions satisfying the first condition within the first period, such that it is ensured that the terminal device transmits an effective occasion.

In the method according to the embodiments of the present disclosure, the network device configures transmission occasions, such that a transmission position of the first information is flexibly controlled, thereby implementing non-consecutive indications or reducing UCI overheads.

In the method according to the embodiments of the present disclosure, the network device configures the first resource set, such that a configuration of the first resource set is not bonded to a fixed CG configuration, and a working advantage is present in a case where the terminal device is configured with a plurality of CG configurations.

FIG. 14 illustrates a flowchart of a method for indicating channel resources according to some embodiments of the present disclosure. The method is performed a network device, and the method includes the following process.

In process 1410, the network device receives a first channel, wherein the first channel carries first information, the first information indicating that a preconfigured channel resource is unused; wherein a physical resource occupied by the first channel is a physical resource within a first resource set, the first resource set including at least one resource unit.

In some embodiments, the first resource set is determined based on transmission occasions for a periodic channel, or the first resource set is determined based on configuration information.

In some embodiments, the at least one resource unit is determined based on Q transmission occasions for the periodic channel, wherein Q is a positive integer; or the at least one resource unit is determined based on a resource unit where at least one transmission occasion for the periodic channel is located.

In some embodiments, the at least one resource unit being determined based on the Q transmission occasions for the periodic channel includes: the at least one resource unit being the Q transmission occasions for the periodic channel; or the at least one resource unit being a resource unit where the Q transmission occasions for the periodic channel are located.

In some embodiments, the Q transmission occasions include one of:

first Q transmission occasions within a first period of the periodic channel;
first Q transmission occasions satisfying a first condition within a first period of the periodic channel; or
first A transmission occasions within a first period of the periodic channel and last (Q-A) transmission occasions within a period prior to the first period;
wherein A is a non-negative integer, A is less than Q, Q is less and or equal to a number T of transmission occasions within one period of the periodic channel, and T is a positive integer.

In some embodiments, the unused preconfigured channel resource indicated by the first information is a channel resource within the first period.

In some embodiments, the Q transmission occasions are Q transmission occasions within at least one period of the periodic channel.

In some embodiments, the at least one resource unit is determined based on the resource unit where the at least one transmission occasion for the periodic channel is located includes: the at least one resource unit being determined based on a first reference resource unit; wherein the first reference resource unit is a resource unit where at least one transmission occasion for the periodic channel is located.

In some embodiments, the at least one resource unit being determined based on the first reference resource unit includes: the at least one resource unit being determined based on the first reference resource unit and a second reference resource unit; wherein the first reference resource unit and the second reference resource unit are resource units where at least one transmission occasion for the periodic channel is located.

In some embodiments, a time-domain position of the at least one resource unit is within a first time-domain range, wherein the first time-domain range is a time-domain range from a time-domain position of the first reference resource unit to a time-domain position of the second reference resource unit.

In some embodiments, the at least one resource unit includes at least one of: the first reference resource unit; S resource units subsequent to the first reference resource unit; or V resource units prior to the first reference resource unit; wherein S and V are both non-negative integers.

In some embodiments, the first reference resource unit includes at least one of: a resource unit where a first transmission occasion within a second period of the periodic channel is located; a start resource unit within a second period of the periodic channel; or a resource unit preconfigured by the network device.

In some embodiments, the unused preconfigured channel resource indicated by the first information is a channel resource within the second period.

In some embodiments, the at least one resource unit includes one of: all resource units in the first time-domain range; a resource unit for uplink transmission in the first time-domain range; a first resource unit in the first time-domain range, wherein the first resource unit includes a transmission occasion for the periodic channel; or a second resource unit in the first time-domain range, wherein the second resource unit includes a transmission occasion satisfying a first condition.

In some embodiments, the S resource units subsequent to the first reference resource unit include one of: first S consecutive resource units subsequent to the first reference resource unit; first S resource units for uplink transmission subsequent to the first reference resource unit; first S first resource units subsequent to the first reference resource unit, wherein the first resource units include a transmission occasion for the periodic channel; or first S second resource units subsequent to the first reference resource unit, wherein the second resource units include a transmission occasion satisfying a first condition.

In some embodiments, the V resource units prior to the first reference resource unit include one of: last V consecutive resource units prior to the first reference resource unit; last V resource units for uplink transmission prior to the first reference resource unit; last V first resource units prior to the first reference resource unit, wherein the first resource units include a transmission occasion for the periodic channel; or last V second resource units prior to the first reference resource unit, wherein the second resource units include a transmission occasion satisfying a first condition.

In some embodiments, the resource unit includes one of: at least one slot; at least one sub-slot; at least one symbol; at least one RB; or at least one subcarrier.

In some embodiments, the first condition includes at least one of the following items:

symbols occupied by the transmission occasions are all uplink symbols;
symbols occupied by the transmission occasions are uplink symbols or flexile symbols;
RBs occupied by the transmission occasions are all uplink RBs;
RBs occupied by the transmission occasions are uplink RBs, flexible RBs, or RBs within a guard band;
symbols occupied by the transmission occasions do not include a downlink symbol;
symbols occupied by the transmission occasions do not include a downlink symbol or a flexible symbol;

symbols occupied by the transmission occasions do not include a symbol occupied by a synchronization signal;
symbols occupied by the transmission occasions do not include a symbol occupied by a broadcast channel;
symbols occupied by the transmission occasions do not include a symbol occupied by a downlink control channel;
RBs occupied by the transmission occasions do not include a downlink RB;
RBs occupied by the transmission occasions do not include an RB within a guard band or a flexible RB;
RBs occupied by the transmission occasions do not include an RB occupied by a synchronization signal;
RBs occupied by the transmission occasions do not include an RB occupied by a broadcast channel;
RBs occupied by the transmission occasions do not include an RB occupied by a downlink control channel;
the transmission occasions are not discarded or cancelled; or
the transmission occasions are transmission occasions actually transmitted by a terminal device.

In some embodiments, the network device configures the Q transmission occasions for a terminal device; or the network device configures the at least one transmission occasion for a terminal device.

In some embodiments, the configuration information is used to indicate at least one of: a period; a start time-domain unit identifier or time-domain offset; a start frequency-domain unit identifier or frequency-domain offset; the number of time-domain units; the number of frequency-domain units; a pattern of a time-domain unit; a pattern of a frequency-domain unit; at least one time-domain unit identifier or time-domain offset; or at least one frequency-domain unit identifier or frequency-domain offset.

In some embodiments, the first channel includes at least one of a PUCCH or a PUSCH.

In some embodiments, in a case where the first channel is the PUCCH, the first channel carries the first information and second information, wherein the second information includes at least one of feedback information, an SR, or CSI; or in a case where the first channel is the PUSCH, the first channel carries the first information and third information, wherein the third information includes at least one of a TB, feedback information, or CSI.

In some embodiments, a start resource location of the first channel is a start resource location of the first resource set; or a start resource location of the first channel is subsequent to a start resource location of the first resource set; or a start resource location of the first channel is not prior to a start resource location of the first resource set.

In some embodiments, fourth information is coded and mapped to the first channel, wherein the fourth information includes the first information and fifth information.

In some embodiments, the fifth information includes at least one of: HARQ process number information; RV information; MCS information; feedback response information; an SR; or CSI.

In some embodiments, in a case where the first channel is a PUSCH configured over higher layer signaling, the fifth information includes at least one of the HARQ process number information or the feedback response information; or in a case where the first channel is a PUSCH scheduled by DCI, the fifth information includes the feedback response information.

In some embodiments, the preconfigured channel resource includes at least one of: a CG PUSCH occasion; a PUSCH transmission occasion configured over higher layer signaling; a PUCCH resource configured over higher layer signaling; or a PUSCH or PUCCH indicated by first DCI; wherein the first DCI is transmitted prior to the first channel.

In some embodiments, the preconfigured channel resource indicated by the first information as unused includes: an unused CG PUSCH occasion in a first CG configuration; or unused CG PUSCH occasions in different CG configurations.

In some embodiments, the unused preconfigured channel resource is allocated to another terminal device other than the terminal device.

The terminal device transmits the first information indicating that the preconfigured channel resource is unused to the network device, and the network device determines the unused preconfigured channel resource based on the first information and allocates the unused preconfigured channel resource another terminal device other than the above terminal device for data transmission, thereby improving the data transmission efficiency.

For the details of the implementation of the above method for indicating channel resources, reference may be made to the details of the implementation on the terminal, which are not repeated further herein.

FIG. 15 illustrates a block diagram of an apparatus for indicating channel resources according to some embodiments of the present disclosure. The apparatus includes a transmitting module 1510 and a processing module 1520. The functions of the transmitting module 1510 are performed by a transmitter in a terminal device, and the functions of the processing module 1520 are performed by a processor in the terminal device.

The transmitting module 1510 is configured to transmit a first channel, wherein the first channel carries first information, the first information indicating that a preconfigured channel resource is unused; wherein a physical resource occupied by the first channel is a physical resource within a first resource set, the first resource set including at least one resource unit.

In some embodiments of the present disclosure, the first resource set is determined based on transmission occasions for a periodic channel, or the first resource set is determined based on configuration information.

In some embodiments of the present disclosure, the at least one resource unit is determined based on Q transmission occasions for the periodic channel, wherein Q is a positive integer; or the at least one resource unit is determined based on a resource unit where at least one transmission occasion for the periodic channel is located.

In some embodiments of the present disclosure, the at least one resource unit is the Q transmission occasions for the periodic channel; or the at least one resource unit is a resource unit where the Q transmission occasions for the periodic channel are located.

In some embodiments of the present disclosure, the Q transmission occasions include one of: first Q transmission occasions within a first period of the periodic channel; first Q transmission occasions satisfying a first condition within the first period of the periodic channel; or first A transmission occasions within the first period of the periodic channel and last (Q-A) transmission occasions within a period prior to the first period; wherein A is a non-negative integer, A is less than Q, Q is less and or equal to a number T of transmission occasions within one period of the periodic channel, and T is a positive integer.

In some embodiments of the present disclosure, the preconfigured channel resource indicated by the first information as unused is a channel resource within the first period.

In some embodiments of the present disclosure, the Q transmission occasions are Q transmission occasions within at least one period of the periodic channel.

In some embodiments of the present disclosure, the at least one resource unit is determined based on a first reference resource unit; wherein the first reference resource unit is a resource unit wherein at least one transmission occasion for the periodic channel is located.

In some embodiments of the present disclosure, the at least one resource unit is determined based on the first reference resource unit and a second reference resource unit; wherein the first reference resource unit and the second reference resource unit are resource units where at least one transmission occasion for the periodic channel is located.

In some embodiments of the present disclosure, a time-domain position of the at least one resource unit is within a first time-domain range, wherein the first time-domain range is a time-domain range from a time-domain position of the first reference resource unit to a time-domain position of the second reference resource unit.

In some embodiments of the present disclosure, the at least one resource unit includes at least one of: the first reference resource unit; S resource units subsequent to the first reference resource unit; or V resource units prior to the first reference resource unit; wherein S and V are both non-negative integers.

In some embodiments of the present disclosure, the first reference resource unit includes at least one of: a resource unit where a first transmission occasion within a second period of the periodic channel is located; a start resource unit within a second period of the periodic channel; or a resource unit preconfigured by a network device.

In some embodiments of the present disclosure, the unused preconfigured channel resource indicated by the first information is a channel resource within the second period.

In some embodiments of the present disclosure, the at least one resource unit includes one of: all resource units in the first time-domain range; a resource unit for uplink transmission in the first time-domain range; a first resource unit in the first time-domain range, wherein the first resource unit includes a transmission occasion for the periodic channel; or a second resource unit in the first time-domain range, wherein the second resource unit includes a transmission occasion satisfying a first condition.

In some embodiments of the present disclosure, the S resource units subsequent to the first reference resource unit include one of:

first S consecutive resource units subsequent to the first reference resource unit;
first S resource units for uplink transmission subsequent to the first reference resource unit;
first S first resource units subsequent to the first reference resource unit, wherein the first resource units include a transmission occasion for the periodic channel; or
first S second resource units subsequent to the first reference resource unit, wherein the second resource units include a transmission occasion satisfying a first condition.
In some embodiments of the present disclosure, the V resource units prior to the first reference resource unit include one of:
last V consecutive resource units prior to the first reference resource unit;
last V resource units for uplink transmission prior to the first reference resource unit;
last V first resource units prior to the first reference resource unit, wherein the first resource units include a transmission occasion for the periodic channel; or
last V second resource units prior to the first reference resource unit, wherein the second resource units include a transmission occasion satisfying a first condition.

In some embodiments of the present disclosure, the resource unit includes one of: at least one slot; at least one sub-slot; at least one symbol; at least one RB; or at least one subcarrier.

In some embodiments of the present disclosure, the first condition includes at least one of the following items:

symbols occupied by the transmission occasions are all uplink symbols;
symbols occupied by the transmission occasions are uplink symbols or flexile symbols;
RBs occupied by the transmission occasions are all uplink RBs;
RBs occupied by the transmission occasions are uplink RBs, flexible RBs, or RBs within a guard band;
symbols occupied by the transmission occasions do not include a downlink symbol;
symbols occupied by the transmission occasions do not include a downlink symbol or a flexible symbol;
symbols occupied by the transmission occasions do not include a symbol occupied by a synchronization signal;
symbols occupied by the transmission occasions do not include a symbol occupied by a broadcast channel;
symbols occupied by the transmission occasions do not include a symbol occupied by a downlink control channel;
RBs occupied by the transmission occasions do not include a downlink RB;
RBs occupied by the transmission occasions do not include an RB within a guard band or a flexible RB;
RBs occupied by the transmission occasions do not include an RB occupied by a synchronization signal;
RBs occupied by the transmission occasions do not include an RB occupied by a broadcast channel;
RBs occupied by the transmission occasions do not include an RB occupied by a downlink control channel;
the transmission occasions are not discarded or cancelled; or
the transmission occasions are transmission occasions actually transmitted by the terminal device.

In some embodiments, the Q transmission occasions are configured by a network device, or the at least one transmission occasion is configured by a network device.

In some embodiments, the configuration information is used to indicate at least one of: a period; a start time-domain unit identifier or a time-domain offset; a start frequency-domain unit identifier or a frequency-domain offset; the number of time-domain units; the number of frequency-domain units; a pattern of a time-domain unit; a pattern of a frequency-domain unit; at least one time-domain unit identifier or time-domain offset; or at least one frequency-domain unit identifier or frequency-domain offset.

In some embodiments, the first channel includes at least one of a PUCCH or a PUSCH.

In some embodiments, in a case where the first channel is the PUCCH, the first channel carries the first information and second information, wherein the second information includes at least one of feedback information, an SR, or CSI; or in a case where the first channel is the PUSCH, the first channel carries the first information and third information, wherein the third information includes at least one of a TB, feedback information, or CSI.

In some embodiments, a start resource location of the first channel is a start resource location of the first resource set; or a start resource location of the first channel is subsequent to a start resource location of the first resource set; or a start resource location of the first channel is not prior to a start resource location of the first resource set.

In some embodiments, the processing module 1520 is configured to code and map fourth information to the first channel, wherein the fourth information includes the first information and fifth information.

In some embodiments, the fifth information includes at least one of: HARQ process number information; RV information; MCS information; feedback response information; an SR; or CSI.

In some embodiments, in a case where the first channel is a PUSCH configured over higher layer signaling, the fifth information includes at least one of the HARQ process number information or the feedback response information; or in a case where the first channel is a PUSCH scheduled by DCI, the fifth information includes the feedback response information.

In some embodiments, the preconfigured channel resource includes at least one of: a CG PUSCH occasion; a PUSCH transmission occasion configured over higher layer signaling; a PUCCH resource configured over higher layer signaling; or a PUSCH or PUCCH indicated by first DCI; wherein the first DCI is transmitted prior to the first channel.

In some embodiments, the unused preconfigured channel resource indicated by the first information includes: an unused CG PUSCH occasion in a first CG configuration; or unused CG PUSCH occasions in different CG configurations.

FIG. 16 illustrates a block diagram of an apparatus for indicating channel resources according to some embodiments of the present disclosure. The apparatus includes a receiving module 1610, a processing module 1620, and an allocating module 1630. The functions of the receiving module 1610 are performed over a receiver in a network device, the functions of the processing module 1620 are performed by a processor in the network device, and the functions of the allocating module 1630 are performed by a transmitter in the network device.

The receiving module 1610 is configured to receive a first channel, wherein the first channel carries first information, the first information indicating that a preconfigured channel resource is unused; wherein a physical resource occupied by the first channel is a physical resource within a first resource set, the first resource set including at least one resource unit.

In some embodiments, the first resource set is determined based on transmission occasions for a periodic channel, or the first resource set is determined based on configuration information.

In some embodiments, the at least one resource unit is determined based on Q transmission occasions for the periodic channel, wherein Q is a positive integer; or the at least one resource unit is determined based on a resource unit where at least one transmission occasion for the periodic channel is located.

In some embodiments, the at least one resource unit is the Q transmission occasions for the periodic channel; or the at least one resource unit is a resource unit where the Q transmission occasions for the periodic channel are located.

In some embodiments, the Q transmission occasions include one of: first Q transmission occasions within a first period of the periodic channel; first Q transmission occasions satisfying a first condition within a first period of the periodic channel; or first A transmission occasions within a first period of the periodic channel and last (Q-A) transmission occasions within a period prior to the first period; wherein A is a non-negative integer, A is less than Q, Q is less and or equal to a number T of transmission occasions within one period of the periodic channel, and T is a positive integer.

In some embodiments, the preconfigured channel resource indicated by the first information as unused is a channel resource within the first period.

In some embodiments, the Q transmission occasions are Q transmission occasions within at least one period of the periodic channel.

In some embodiments, the at least one resource unit is determined based on a first reference resource unit; wherein the first reference resource unit is a resource unit wherein at least one transmission occasion for the periodic channel is located.

In some embodiments, the at least one resource unit is determined based on the first reference resource unit and a second reference resource unit; wherein the first reference resource unit and the second reference resource unit are resource units where at least one transmission occasion for the periodic channel is located.

In some embodiments, a time-domain position of the at least one resource unit is within a first time-domain range, wherein the first time-domain range is a time-domain range from a time-domain position of the first reference resource unit to a time-domain position of the second reference resource unit.

In some embodiments, the at least one resource unit includes at least one of: the first reference resource unit; S resource units subsequent to the first reference resource unit; or V resource units prior to the first reference resource unit; wherein S and V are both non-negative integers.

In some embodiments, the first reference resource unit includes at least one of: a resource unit where a first transmission occasion within a second period of the periodic channel is located; a start resource unit within a second period of the periodic channel; or a resource unit preconfigured by the network device.

In some embodiments, the unused preconfigured channel resource indicated by the first information is a channel resource within the second period.

In some embodiments, the at least one resource unit includes one of: all resource units in the first time-domain range; a resource unit for uplink transmission in the first time-domain range; a first resource unit in the first time-domain range, wherein the first resource unit includes a transmission occasion for the periodic channel; or a second resource unit in the first time-domain range, wherein the second resource unit includes a transmission occasion satisfying a first condition.

In some embodiments, the S resource units subsequent to the first reference resource unit include one of: first S consecutive resource units subsequent to the first reference resource unit; first S resource units for uplink transmission subsequent to the first reference resource unit; first S first resource units subsequent to the first reference resource unit, wherein the first resource units include a transmission occasion for the periodic channel; or first S second resource units subsequent to the first reference resource unit, wherein the second resource units include a transmission occasion satisfying a first condition.

In some embodiments, the V resource units prior to the first reference resource unit comprise one of: last V consecutive resource units prior to the first reference resource unit; last V resource units for uplink transmission prior to the first reference resource unit; last V first resource units prior to the first reference resource unit, wherein the first resource units include a transmission occasion for the periodic channel; or last V second resource units prior to the first reference resource unit, wherein the second resource units include a transmission occasion satisfying a first condition.

In some embodiments, the resource unit includes one of: at least one slot; at least one sub-slot; at least one symbol; at least one RB; or at least one subcarrier.

In some embodiments, the first condition includes at least one of the following items:

symbols occupied by the transmission occasions are all uplink symbols;
symbols occupied by the transmission occasions are uplink symbols or flexile symbols;
RBs occupied by the transmission occasions are all uplink RBs;
RBs occupied by the transmission occasions are uplink RBs, flexible RBs, or RBs within a guard band;
symbols occupied by the transmission occasions do not include a downlink symbol;
symbols occupied by the transmission occasions do not include a downlink symbol or a flexible symbol;
symbols occupied by the transmission occasions do not include a symbol occupied by a synchronization signal;

symbols occupied by the transmission occasions do not include a symbol occupied by a broadcast channel;
symbols occupied by the transmission occasions do not include a symbol occupied by a downlink control channel;
RBs occupied by the transmission occasions do not include a downlink RB;
RBs occupied by the transmission occasions do not include an RBs within a guard band or a flexible RB;
RBs occupied by the transmission occasions do not include an RB occupied by a synchronization signal;
RBs occupied by the transmission occasions do not include an RB occupied by a broadcast channel;
RBs occupied by the transmission occasions do not include an RB occupied by a downlink control channel;
the transmission occasions are not discarded or cancelled; or
the transmission occasions are transmission occasions actually transmitted by a terminal device.

In some embodiments, the allocating module 1630 is configured to configure the Q transmission occasions for a terminal device; or configure the at least one transmission occasion for a terminal device.

In some embodiments, the configuration information indicates at least one of: a period; a start time-domain unit identifier or time-domain offset; a start frequency-domain unit identifier or frequency-domain offset; the number of time-domain units; the number of frequency-domain units; a pattern of a time-domain unit; a pattern of a frequency-domain unit; at least one time-domain unit identifier or time-domain offset; or at least one frequency-domain unit identifier or frequency-domain offset.

In some embodiments, the first channel includes at least one of a PUCCH or a PUSCH.

In some embodiments, in a case where the first channel is the PUCCH, the first channel carries the first information and second information, wherein the second information includes at least one of feedback information, an SR, or CSI; or in a case where the first channel is the PUSCH, the first channel carries the first information and third information, wherein the third information includes at least one of a TB, feedback information, or CSI.

In some embodiments, a start resource location of the first channel is a start resource location of the first resource set; or a start resource location of the first channel is subsequent to a start resource location of the first resource set; or a start resource location of the first channel is not prior to a start resource location of the first resource set.

In some embodiments, the processing module 1620 is configured to code and map fourth information to the first channel, wherein the fourth information includes the first information and fifth information.

In some embodiments, the fifth information includes at least one of: HARQ process number information; RV information; MCS information; feedback response information; an SR; or CSI.

In some embodiments, in a case where the first channel is a PUSCH configured over higher layer signaling, the fifth information includes at least one of the HARQ process number information or the feedback response information; or in a case where the first channel is a PUSCH scheduled by DCI, the fifth information includes the feedback response information.

In some embodiments, the preconfigured channel resource includes at least one of: a CG PUSCH occasion; a PUSCH transmission occasion configured over higher layer signaling; a PUCCH resource configured over higher layer signaling; or a PUSCH or PUCCH indicated by first DCI; wherein the first DCI is transmitted prior to the first channel.

In some embodiments, the unused preconfigured channel resource indicated by the first information includes: an unused CG PUSCH occasion in a first CG configuration; or unused CG PUSCH occasions in different CG configurations.

In some embodiments, the allocating module 1630 is configured to allocate the unused preconfigured channel resource to another terminal device other than the terminal device.

FIG. 17 illustrates a schematic structural diagram of a terminal device or network device 1700 according to some embodiments of the present disclosure. The terminal device or network device 1700 includes a processor 1710, a receiver 1702, a transmitter 1703, a memory 1704, and a bus 1705.

The processor 1701 includes one or more processing cores. The processor 1701 runs various functional applications and performs information processing by running one or more software programs and modules. In some embodiments, the processor 1701 is configured to perform the functions and processes performed by the processing module 1520 and the processing module 1620 in the above method embodiments.

The receiver 1702 and the transmitter 1703 may be implemented as one communication assembly. The communication assembly may be a communication chip, and the communication assembly may be referred to as a transceiver. In some embodiments, the receiver 1702 is configured to perform the functions and processes performed by the receiving module 1610, and the transmitter 1703 is configured to perform the functions and processes performed by the transmitting module 1510 and the allocating module 1630.

The memory 1704 may be connected to the processor 1701 over the bus 1705.

The memory 1704 may be configured to store at least one instruction, and the processor 1701 is configured to execute the at least one instruction to perform the processes in the above method embodiments.

In addition, the memory 1704 may be practiced by any type of volatile or non-volatile storage device or a combination thereof. The volatile or non-volatile storage device includes but is not limited to: a magnetic disk or an optical disc, an electrically-erasable programmable read only memory (EEPROM), an erasable programmable read only memory (EPROM), a static random access memory (SRAM), a read-only memory (ROM), a magnetic memory, a flash memory, or a programmable read-only memory (PROM).

In some embodiments, the receiver 1702 receives signals or data independently, or the processor 1701 controls the receiver 1702 to receive signals or data, or the processor 1701 requests the receiver 1702 to receive signals or data, or the processor 1701 cooperates with the receiver 1702 to receive signals or data.

In some embodiments, the transmitter 1703 transmits signals or data independently, or the processor 1701 controls the transmitter 1703 to transmit signals or data, or the processor 1701 requests the transmitter 1703 to transmit signals or data, or the processor 1701 cooperates with the transmitter 1703 to transmit signals or data.

Some embodiments of the present disclosure further provide a computer-readable storage medium. The computer-readable storage medium stores at least one instruction, at least one program segment, at least one code set or instruction set, wherein the at least one instruction, the at least one program segment, the at least one code set or instruction set, when loaded and executed by a processor, causes the processor to perform the methods for indicating channel resources in the above embodiments.

Some embodiments of the present disclosure further provide a computer program product or a computer program. The computer program product or computer program, when running on a processor, causes a terminal device or network device to perform the methods for indicating channel resources in the above embodiments.

A person skilled in the art shall appreciate that all or part of the processes in the abode embodiments may be performed through hardware or through relevant hardware instructed by a program stored in a computer-readable storage medium. The storage medium may be a ROM, a magnetic disk, an optical disc, or the like.

Described above are merely optional embodiments of the present disclosure and are not intended to limit the present disclosure. Any modifications, equivalent replacements, improvements, and the like made within the spirit and principle of the present disclosure shall fall within the protection scope of the present disclosure.

**Claims**

1. A method for indicating channel resources, performed by a terminal device, the method comprising:

    transmitting a first channel, wherein the first channel carries first information, the first information indicating that a preconfigured channel resource is unused;
    wherein a physical resource occupied by the first channel is a physical resource within a first resource set, the first resource set comprising at least one resource unit.

2. The method according to claim 1, wherein the first resource set is determined based on transmission occasions for a periodic channel, or the first resource set is determined based on configuration information.

3. The method according to claim 2, wherein

    the at least one resource unit is determined based on Q transmission occasions for the periodic channel, wherein Q is a positive integer; or
    the at least one resource unit is determined based on a resource unit where at least one transmission occasion for the periodic channel is located.

4. The method according to claim 3, wherein the at least one resource unit being determined based on the Q transmission occasions for the periodic channel comprises:

    the at least one resource unit being the Q transmission occasions for the periodic channel; or
    the at least one resource unit being a resource unit where the Q transmission occasions for the periodic channel are located.

5. The method according to claim 3, wherein the Q transmission occasions comprise:

    first Q transmission occasions within a first period of the periodic channel;
    first Q transmission occasions satisfying a first condition within a first period of the periodic channel; or
    first A transmission occasions within a first period of the periodic channel and last (Q - A) transmission occasions within a period prior to the first period;
    wherein A is a non-negative integer, A is less than Q, Q is less and or equal to a number T of transmission occasions within one period of the periodic channel, and T is a positive integer.

**6.** The method according to claim 5, wherein the unused preconfigured channel resource indicated by the first information is a channel resource within the first period.

**7.** The method according to claim 3, wherein the Q transmission occasions are Q transmission occasions within at least one period of the periodic channel.

**8.** The method according to claim 3, wherein the at least one resource unit being determined based on the resource unit where the at least one transmission occasion for the periodic channel is located comprises:

the at least one resource unit being determined based on a first reference resource unit;
wherein the first reference resource unit is a resource unit wherein at least one transmission occasion for the periodic channel is located.

**9.** The method according to claim 8, wherein the at least one resource unit being determined based on the first reference resource unit comprises:

the at least one resource unit being determined based on the first reference resource unit and a second reference resource unit;
wherein the first reference resource unit and the second reference resource unit are resource units where at least one transmission occasion for the periodic channel is located.

**10.** The method according to claim 9, wherein a time-domain position of the at least one resource unit is within a first time-domain range, wherein the first time-domain range is a range from a time-domain position of the first reference resource unit to a time-domain position of the second reference resource unit.

**11.** The method according to claim 8, wherein the at least one resource unit comprises at least one of:

the first reference resource unit;
S resource units subsequent to the first reference resource unit; or
V resource units prior to the first reference resource unit;
wherein S and V are both non-negative integers.

**12.** The method according to claim 8 or 9, wherein the first reference resource unit comprises at least one of:

a resource unit where a first transmission occasion within a second period of the periodic channel is located;
a start resource unit within a second period of the periodic channel; or
a resource unit preconfigured by a network device.

**13.** The method according to claim 12, wherein the preconfigured channel resource indicated by the first information as unused is a channel resource within the second period.

**14.** The method according to claim 10, wherein the at least one resource unit comprises one of:

all resource units in the first time-domain range;
a resource unit for uplink transmission in the first time-domain range;
a first resource unit in the first time-domain range, wherein the first resource unit comprises a transmission occasion for the periodic channel; or
a second resource unit in the first time-domain range, wherein the second resource unit comprises a transmission occasion satisfying a first condition.

**15.** The method according to claim 11, wherein the S resource units subsequent to the first reference resource unit comprise:

first S consecutive resource units subsequent to the first reference resource unit;
first S resource units for uplink transmission subsequent to the first reference resource unit;
first S first resource units subsequent to the first reference resource unit, wherein the first resource units comprise a transmission occasion for the periodic channel; or
first S second resource units subsequent to the first reference resource unit, wherein the second resource units comprise a transmission occasion satisfying a first condition.

16. The method according to claim 11, wherein the V resource units prior to the first reference resource unit comprise:

last V consecutive resource units prior to the first reference resource unit;
last V resource units for uplink transmission prior to the first reference resource unit;
last V first resource units prior to the first reference resource unit, wherein the first resource units comprise a transmission occasion for the periodic channel; or
last V second resource units prior to the first reference resource unit, wherein the second resource units comprise a transmission occasion satisfying a first condition.

17. The method according to claim 3, wherein the resource unit comprises:

at least one slot;
at least one sub-slot;
at least one symbol;
at least one resource block (RB); or
at least one subcarrier.

18. The method according to any one of claims 5 to 16, wherein the first condition comprises at least one of the following items:

symbols occupied by the transmission occasions are all uplink symbols;
symbols occupied by the transmission occasions are uplink symbols or flexile symbols;
resource blocks (RBs) occupied by the transmission occasions are all uplink RBs;
RBs occupied by the transmission occasions are uplink RBs, flexible RBs, or RBs within a guard band;
symbols occupied by the transmission occasions do not comprise a downlink symbol;
symbols occupied by the transmission occasions do not comprise a downlink symbol or a flexible symbol;
symbols occupied by the transmission occasions do not comprise a symbol occupied by a synchronization signal;
symbols occupied by the transmission occasions do not comprise a symbol occupied by a broadcast channel;
symbols occupied by the transmission occasions do not comprise a symbol occupied by a downlink control channel;
RBs occupied by the transmission occasions do not comprise a downlink RB;
RBs occupied by the transmission occasions do not comprise an RB within a guard band or a flexible RB;
RBs occupied by the transmission occasions do not comprise an RB occupied by a synchronization signal;
RBs occupied by the transmission occasions do not comprise an RB occupied by a broadcast channel;
RBs occupied by the transmission occasions do not comprise an RB occupied by a downlink control channel;
the transmission occasions are not discarded or cancelled; or
the transmission occasions are transmission occasions actually transmitted by the terminal device.

19. The method according to claim 3, wherein the Q transmission occasions are configured by a network device, or the at least one transmission occasion is configured by a network device.

20. The method according to claim 2, wherein the configuration information indicates at least one of following parameters:

a period;
a start time-domain unit identifier or a time-domain offset;
a start frequency-domain unit identifier or a frequency-domain offset;
a number of time-domain units;
a number of frequency-domain units;
a pattern of a time-domain unit;
a pattern of a frequency-domain unit;
at least one time-domain unit identifier or time-domain offset; or
at least one frequency-domain unit identifier or frequency-domain offset.

21. The method according to any one of claims 1 to 20, wherein the first channel comprises at least one of:

a physical uplink control channel (PUCCH); or
a physical uplink shared channel (PUSCH).

22. The method according to claim 21, wherein

in a case where the first channel is the PUCCH, the first channel carries the first information and second information, wherein the second information comprises at least one of feedback information, a scheduling request (SR), or channel state information (CSI); or
in a case where the first channel is the PUSCH, the first channel carries the first information and third information, wherein the third information comprises at least one of a transport block (TB), feedback information, or CSI.

23. The method according to claim 21 or 22, wherein

a start resource location of the first channel is a start resource location of the first resource set; or
a start resource location of the first channel is subsequent to a start resource location of the first resource set; or
a start resource location of the first channel is not prior to a start resource location of the first resource set.

24. The method according to any one of claims 1 to 23, further comprising:

coding and mapping fourth information to the first channel, wherein the fourth information comprises the first information and fifth information.

25. The method according to claim 24, wherein the fifth information comprises at least one of:

hybrid automatic repeat request (HARQ) process number information;
redundancy version (RV) information;
modulation and coding scheme (MCS) information;
feedback response information;
a scheduling request (SR); or
channel state information (CSI).

26. The method according to claim 25, wherein

in a case where the first channel is a physical uplink shared channel (PUSCH) configured over higher layer signaling, the fifth information comprises at least one of the HARQ process number information or the feedback response information; or
in a case where the first channel is a PUSCH scheduled by downlink control information (DCI), the fifth information comprises the feedback response information.

27. The method according to any one of claims 1 to 26, wherein the preconfigured channel resource comprises at least one of:

a configured grant (CG) physical uplink shared channel (PUSCH) occasion;
a PUSCH transmission occasion configured over higher layer signaling;
a physical uplink control channel (PUCCH) resource configured over higher layer signaling; or
a PUSCH or PUCCH indicated by first downlink control information (DCI);
wherein the first DCI is transmitted prior to the first channel.

28. The method according to any one of claims 1 to 27, wherein the unused preconfigured channel resource indicated by the first information comprises:

an unused configured grant (CG) physical uplink shared channel (PUSCH) occasion in a first CG configuration; or
unused CG PUSCH occasions in different CG configurations.

29. A method for indicating channel resources, performed by a network device, the method comprising:

receiving a first channel, wherein the first channel carries first information, the first information indicating that a preconfigured channel resource is unused;

wherein a physical resource occupied by the first channel is a physical resource within a first resource set, the first resource set comprising at least one resource unit.

30. The method according to claim 29, wherein the first resource set is determined based on transmission occasions for a periodic channel, or the first resource set is determined based on configuration information.

31. The method according to claim 30, wherein

the at least one resource unit is determined based on Q transmission occasions for the periodic channel, wherein Q is a positive integer; or
the at least one resource unit is determined based on a resource unit where at least one transmission occasion for the periodic channel is located.

32. The method according to claim 31, wherein the at least one resource unit being determined based on the Q transmission occasions for the periodic channel comprises:

the at least one resource unit being the Q transmission occasions for the periodic channel; or
the at least one resource unit being a resource unit where the Q transmission occasions for the periodic channel are located.

33. The method according to claim 31, wherein the Q transmission occasions comprise:

first Q transmission occasions within a first period of the periodic channel;
first Q transmission occasions satisfying a first condition within a first period of the periodic channel; or
first A transmission occasions within a first period of the periodic channel and last (Q - A) transmission occasions within a period prior to the first period;
wherein A is a non-negative integer, A is less than Q, Q is less and or equal to a number T of transmission occasions within one period of the periodic channel, and T is a positive integer.

34. The method according to claim 33, wherein the unused preconfigured channel resource indicated by the first information is a channel resource within the first period.

35. The method according to claim 31, wherein the Q transmission occasions are Q transmission occasions within at least one period of the periodic channel.

36. The method according to claim 31, wherein the at least one resource unit being determined based on the resource unit where the at least one transmission occasion for the periodic channel is located comprises:

the at least one resource unit being determined based on a first reference resource unit;
wherein the first reference resource unit is a resource unit where at least one transmission occasion for the periodic channel is located.

37. The method according to claim 36, wherein the at least one resource unit being determined based on the first reference resource unit comprises:

the at least one resource unit being determined based on the first reference resource unit and a second reference resource unit;
wherein the first reference resource unit and the second reference resource unit are resource units where at least one transmission occasion for the periodic channel is located.

38. The method according to claim 37, wherein a time-domain position of the at least one resource unit is within a first time-domain range, wherein the first time-domain range is a range from a time-domain position of the first reference resource unit to a time-domain position of the second reference resource unit.

39. The method according to claim 36, wherein the at least one resource unit comprises at least one of:

the first reference resource unit;
S resource units subsequent to the first reference resource unit; or

V resource units prior to the first reference resource unit;
wherein S and V are both non-negative integers.

40. The method according to claim 36 or 37, wherein the first reference resource unit comprises at least one of:

a resource unit where a first transmission occasion within a second period of the periodic channel is located;
a start resource unit within a second period of the periodic channel; or
a resource unit preconfigured by the network device.

41. The method according to claim 40, wherein the preconfigured channel resource indicated by the first information as unused is a channel resource within the second period.

42. The method according to claim 38, wherein the at least one resource unit comprises one of:

all resource units in the first time-domain range;
a resource unit for uplink transmission in the first time-domain range;
a first resource unit in the first time-domain range, wherein the first resource unit comprises a transmission occasion for the periodic channel; or
a second resource unit in the first time-domain range, wherein the second resource unit comprises a transmission occasion satisfying a first condition.

43. The method according to claim 39, wherein the S resource units subsequent to the first reference resource unit comprise:

first S consecutive resource units subsequent to the first reference resource unit;
first S resource units for uplink transmission subsequent to the first reference resource unit;
first S first resource units subsequent to the first reference resource unit, wherein the first resource units comprise a transmission occasion for the periodic channel; or
first S second resource units subsequent to the first reference resource unit, wherein the second resource units comprise a transmission occasion satisfying a first condition.

44. The method according to claim 39, wherein the V resource units prior to the first reference resource unit comprise:

last V consecutive resource units prior to the first reference resource unit;
last V resource units for uplink transmission prior to the first reference resource unit;
last V first resource units prior to the first reference resource unit, wherein the first resource units comprise a transmission occasion for the periodic channel; or
last V second resource units prior to the first reference resource unit, wherein the second resource units comprise a transmission occasion satisfying a first condition.

45. The method according to claim 31, wherein the resource unit comprises:

at least one slot;
at least one sub-slot;
at least one symbol;
at least one resource block (RB); or
at least one subcarrier.

46. The method according to any one of claims 31 to 44, wherein the first condition comprises at least one of the following items:

symbols occupied by the transmission occasions are all uplink symbols;
symbols occupied by the transmission occasions are uplink symbols or flexile symbols;
resource blocks (RBs) occupied by the transmission occasions are all uplink RBs;
RBs occupied by the transmission occasions are uplink RBs, flexible RBs, or RBs within a guard band;
symbols occupied by the transmission occasions do not comprise a downlink symbol;
symbols occupied by the transmission occasions do not comprise a downlink symbol or a flexible symbol;
symbols occupied by the transmission occasions do not comprise a symbol occupied by a synchronization signal;

symbols occupied by the transmission occasions do not comprise a symbol occupied by a broadcast channel;
symbols occupied by the transmission occasions do not comprise a symbol occupied by a downlink control channel;
RBs occupied by the transmission occasions do not comprise a downlink RB;
RBs occupied by the transmission occasions do not comprise an RB within a guard band or a flexible RB;
RBs occupied by the transmission occasions do not comprise an RB occupied by a synchronization signal;
RBs occupied by the transmission occasions do not comprise an RB occupied by a broadcast channel;
RBs occupied by the transmission occasions do not comprise an RB occupied by a downlink control channel;
the transmission occasions are not discarded or cancelled; or
the transmission occasions are transmission occasions actually transmitted by a terminal device.

**47.** The method according to claim 31, further comprising:

configuring the Q transmission occasions for a terminal device; or
configuring the at least one transmission occasion for a terminal device.

**48.** The method according to claim 30, wherein the configuration information indicates at least one of following parameters:

a period;
a start time-domain unit identifier or time-domain offset;
a start frequency-domain unit identifier or frequency-domain offset;
a number of time-domain units;
a number of frequency-domain units;
a pattern of a time-domain unit;
a pattern of a frequency-domain unit;
at least one time-domain unit identifier or time-domain offset; or
at least one frequency-domain unit identifier or frequency-domain offset.

**49.** The method according to any one of claims 29 to 48, wherein the first channel comprises at least one of:

a physical uplink control channel (PUCCH); or
a physical uplink shared channel (PUSCH).

**50.** The method according to claim 49, wherein

in a case where the first channel is the PUCCH, the first channel carries the first information and second information, wherein the second information comprises at least one of feedback information, a scheduling request (SR), or channel state information (CSI); or
in a case where the first channel is the PUSCH, the first channel carries the first information and third information, wherein the third information comprises at least one of a transport block (TB), feedback information, or CSI.

**51.** The method according to claim 49 or 50, wherein

a start resource location of the first channel is a start resource location of the first resource set;
a start resource location of the first channel is subsequent to a start resource location of the first resource set; or
a start resource location of the first channel is not prior to a start resource location of the first resource set.

**52.** The method according to any one of claims 29 to 51, further comprising:
coding and mapping fourth information to the first channel, wherein the fourth information comprises the first information and fifth information.

**53.** The method according to claim 52, wherein the fifth information comprises at least one of:

hybrid automatic repeat request (HARQ) process number information;
redundancy version (RV) information;
modulation and coding scheme (MCS) information;
feedback response information;

a scheduling request (SR); or
channel state information (CSI).

**54.** The method according to claim 53, wherein

in a case where the first channel is a physical uplink shared channel (PUSCH) configured over higher layer signaling, the fifth information comprises at least one of the HARQ process number information or the feedback response information; or
in a case where the first channel is a PUSCH scheduled by downlink control information (DCI), the fifth information comprises the feedback response information.

**55.** The method according to any one of claims 29 to 54, wherein the preconfigured channel resource comprises at least one of:

a configured grant (CG) physical uplink shared channel (PUSCH) occasion;
a PUSCH transmission occasion configured over higher layer signaling;
a physical uplink control channel (PUCCH) resource configured over higher layer signaling; or
a PUSCH or PUCCH indicated by first downlink control information (DCI);
wherein the first DCI is transmitted prior to the first channel.

**56.** The method according to any one of claims 29 to 55, wherein the unused preconfigured channel resource indicated by the first information comprises:

an unused configured grant (CG) physical uplink shared channel (PUSCH) occasion in a first CG configuration; or
unused CG PUSCH occasions in different CG configurations.

**57.** The method according to claim 56, further comprising:
allocating the unused preconfigured channel resource to another terminal device other than the terminal device.

**58.** An apparatus for indicating channel resources, comprising:
a transmitting module, configured to transmit a first channel, wherein the first channel carries first information, the first information indicating that a preconfigured channel resource is unused; wherein a physical resource occupied by the first channel is a physical resource within a first resource set, the first resource set comprising at least one resource unit.

**59.** An apparatus for indicating channel resources, comprising:
a receiving module, configured to receive a first channel, wherein the first channel carries first information, the first information indicating that a preconfigured channel resource is unused; wherein a physical resource occupied by the first channel is a physical resource within a first resource set, the first resource set comprising at least one resource unit.

**60.** A terminal device, comprising:

a processor;
a transceiver connected to the processor; and
a memory configured to store one or more instructions executable by the processor;
wherein the processor is configured to load and execute the one or more instructions to perform the method for indicating channel resources as defined in any one of claims 1 to 28.

60. A network device, comprising:

a processor;
a transceiver connected to the processor; and
a memory configured to store one or more instructions executable by the processor;
wherein the processor is configured to load and execute the one or more instructions to perform the method for indicating channel resources as defined in any one of claims 29 to 57.

**62.** A computer-readable storage medium, storing at least one computer program, wherein the at least one computer program, when loaded and run by a processor, causes the processor to perform the method for indicating channel resources as defined in any one of claims 1 to 57.

**63.** A computer program product, comprising at least one computer instruction stored in a computer-readable storage medium, wherein the at least one computer instruction, when loaded and executed by a processor from the computer-readable storage medium, causes the processor to perform the method for indicating channel resources as defined in any one of claims 1 to 57.

Network architecture 100

FIG. 1

Transmitting a first channel, wherein the first channel carries first information, the first information indicating that a preconfigured channel resource is unused; wherein a physical resource occupied by the first channel is a physical resource within a first resource set, the first resource set including at least one resource unit

210

FIG. 2

◄First resource set►

| CG PUSCH occasion 1 | CG PUSCH occasion 2 | CG PUSCH occasion 3 | CG PUSCH occasion 4 |
|---|---|---|---|

◄————————First period————————►

FIG. 3

FIG. 4

FIG. 5

FIG. 6

First resource set

| CG PUSCH occasion 1 | CG PUSCH occasion 2 | | CG PUSCH occasion 3 | CG PUSCH occasion 4 |

←————————First period————————→

FIG. 7

←—First resource set—→

| CG PUSCH occasion 1 | CG PUSCH occasion 2 | CG PUSCH occasion 3 | CG PUSCH occasion 4 |

←Slot 1→ ←Slot 2→ ←Slot 3→ ←Slot 4→

←————————Second period————————→

FIG. 8

←————First resource set————→

| CG PUSCH occasion 1 | DG PUSCH | CG PUSCH occasion 2 | CG PUSCH occasion 3 | CG PUSCH occasion 4 |

←——Slot 1——→ ←——Slot 2——→

←————————Second period————————→

FIG. 9

←—First resource set—→

| CG PUSCH occasion 5 | CG PUSCH occasion 1 | CG PUSCH occasion 2 | CG PUSCH occasion 3 | CG PUSCH occasion 4 |

←Slot 1→ ←Slot 2→ ←Slot 3→ ←Slot 4→ ←Slot 5→

←————————————Second period————————————→

FIG. 10

←————First resource set————→

| CG PUSCH occasion 5 | DG PUSCH | CG PUSCH occasion 1 | CG PUSCH occasion 2 | CG PUSCH occasion 3 | CG PUSCH occasion 4 |

←————Slot 1————→ ←—Slot 2—→ ←—Slot 3—→ ←Slot 4→ ←Slot 5→

←————————————Second period————————————→

FIG. 11

| CG PUSCH occasion 1 | CG PUSCH occasion 2 | CG PUSCH occasion 3 | CG PUSCH occasion 4 | CG PUSCH occasion 1 | CG PUSCH occasion 2 | CG PUSCH occasion 1 | CG PUSCH occasion 2 |

←First resource set→                          ←———First resource set———→

←————————————Period————————————→

Time

☐ CG configuration 1, period P1
┌┄┄┄┐ CG configuration 2, period P2
┌─·─┐ CG configuration 3, period P3

FIG. 12

| ☐ CG PUSCH occasion 1 | CG PUSCH occasion 2 | CG PUSCH occasion 3 | CG PUSCH occasion 4 | CG PUSCH occasion 1 | ☐ CG PUSCH occasion 2 | CG PUSCH occasion 1 | CG PUSCH occasion 2 |

◀First resource set▶

◀First resource set▶

◀————————Period————————▶

Time

☐ CG configuration 1, period P1

CG configuration 2, period P2

CG configuration 3, period P3

FIG. 13

Receiving a first channel, wherein the first channel carries first information, the first information indicating that a preconfigured channel resource is unused; wherein a physical resource occupied by the first channel is a physical resource within a first resource set, the first resource set including at least one resource unit

1410

FIG. 14

Transmitting module 1510

Processing module 1520

FIG. 15

Receiving module 1610

Processing module 1620

Allocating module 1630

FIG. 16

Terminal device or network device 1700

Processor — 1701

Transmitter — 1703

Bus — 1705

Receiver — 1702

Memory — 1704

FIG. 17

## INTERNATIONAL SEARCH REPORT

| International application No. |
|---|
| **PCT/CN2023/075354** |

| A. | CLASSIFICATION OF SUBJECT MATTER |
|---|---|

H04W72/21(2023.01)i; H04W72/04(2023.01)i

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNTXT, ENTXT, ENTXTC, VEN: 指示, 通知, 报告, 不, 没有, 使用, 占用, 多余, 剩余, 网络设备, 信道, 用户, 终端, 资源, CG, PUSCH, occasion, TO, resource, usage, channel, indicate, occupancy, UE, unused, use, unoccup+, gNB

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2022041224 A1 (HUAWEI TECHNOLOGIES CO., LTD.) 03 March 2022 (2022-03-03) description, paragraphs 7-24, 248-342 and 498-520 | 1-63 |
| A | OPPO. "Discussion on scheduling enhancement" *3GPP TSG-RAN WG2 #120 R2-2211961*, 04 November 2022 (2022-11-04), entire document | 1-63 |
| A | VIVO. "Discussion on scheduling enhancements XR-specific capacity improvements" *3GPP TSG-RAN WG2 Meeting #120 R2-2211497*, 04 November 2022 (2022-11-04), entire document | 1-63 |
| A | CN 101047427 A (HUAWEI TECHNOLOGIES CO., LTD.) 03 October 2007 (2007-10-03) entire document | 1-63 |
| A | CN 107613564 A (BEIJING XINWEI TELECOM TECHNOLOGY INC.) 19 January 2018 (2018-01-19) entire document | 1-63 |

☑ Further documents are listed in the continuation of Box C.　　☑ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **09 October 2023** | **12 October 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/075354** |

**C. DOCUMENTS CONSIDERED TO BE RELEVANT**

| Category* | Citation of document, with indication, where appropriate, of the relevant passages | Relevant to claim No. |
| --- | --- | --- |
| A | WO 2023272458 A1 (BEIJING XIAOMI MOBILE SOFTWARE CO., LTD.) 05 January 2023 (2023-01-05)<br>    entire document | 1-63 |

Form PCT/ISA/210 (second sheet) (July 2022)

**INTERNATIONAL SEARCH REPORT**
Information on patent family members

International application No.

**PCT/CN2023/075354**

| Patent document cited in search report | | | Publication date (day/month/year) | Patent family member(s) | | | Publication date (day/month/year) |
|---|---|---|---|---|---|---|---|
| WO | 2022041224 | A1 | 03 March 2022 | US | 2023239898 | A1 | 27 July 2023 |
| | | | | EP | 4207856 | A1 | 05 July 2023 |
| | | | | CN | 115997403 | A1 | 21 April 2023 |
| CN | 101047427 | A | 03 October 2007 | None | | | |
| CN | 107613564 | A | 19 January 2018 | None | | | |
| WO | 2023272458 | A1 | 05 January 2023 | CN | 113632536 | A | 09 November 2021 |

Form PCT/ISA/210 (patent family annex) (July 2022)